(19) Europäisches Patentamt
European Patent Office
Office européen des brevets

(11) **EP 4 120 403 A1**

(12) **EUROPEAN PATENT APPLICATION**
published in accordance with Art. 153(4) EPC

(43) Date of publication:
**18.01.2023 Bulletin 2023/03**

(21) Application number: **21768841.5**

(22) Date of filing: **02.03.2021**

(51) International Patent Classification (IPC):
*H01M 4/88* (2006.01)     *C25B 11/04* (2021.01)
*H01M 8/0213* (2016.01)     *D01F 9/22* (2006.01)

(52) Cooperative Patent Classification (CPC):
**C25B 11/04; D01F 9/22; H01M 4/88; H01M 8/0213;**
Y02E 60/50; Y02P 70/50

(86) International application number:
**PCT/JP2021/007981**

(87) International publication number:
**WO 2021/182188 (16.09.2021 Gazette 2021/37)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **13.03.2020 JP 2020044687**

(71) Applicant: **Teijin Limited**
**Osaka 530-0005 (JP)**

(72) Inventor: **KAWAMOTO, Hironori**
**Osaka-shi, Osaka 530-0005 (JP)**

(74) Representative: **Carpmaels & Ransford LLP**
**One Southampton Row**
**London WC1B 5HA (GB)**

(54) **METHOD AND APPARATUS FOR MANUFACTURING CARBON FIBER ELECTRODE SUBSTRATE**

(57)     A manufacturing method and a manufacturing apparatus have high yields. The manufacturing method is a method for manufacturing a carbon fiber electrode substrate (3a) by feeding an oxidized fiber substrate (1a) through a carbonization furnace (102, 103) to carbonize the oxidized fiber substrate (1a). The method includes feeding, through the carbonization furnace (102, 103), a plurality of oxidized fiber substrates (1a) arranged in a thickness direction of the oxidized fiber substrates (1a).

FIG. 1A

EP 4 120 403 A1

# FIG. 1B

## Description

### Technical Field

The present invention relates to manufacture of an electrically conductive carbon fiber electrode substrate.

### Background Art

Carbon fiber electrode substrates, which are obtained by forming oxidized fiber into sheet substrates of, for example, felt or woven fabric and then carbonizing the substrates, have been developed for applications including separators and electrodes for fuel cells. A carbon fiber electrode substrate is produced by, for example, feeding a polyacrylonitrile oxidized fiber sheet into a low-temperature furnace, heating the oxidized fiber sheet in an inert gas atmosphere at 500 to 1,000 °C, feeding the resultant sheet into a high-temperature furnace, and heating the sheet in an inert gas atmosphere at 1,000 to 2,500 °C (e.g., Patent Literature 1).

The oxidized fiber sheet in Patent Literature 1 corresponds herein to an oxidized fiber substrate, the low-temperature furnace corresponds herein to a first carbonization furnace, and the high-temperature furnace to a second carbonization furnace.

### Citation List

### Patent Literature

Patent Literature 1: Japanese Unexamined Patent Application Publication No. 2005-206968

## Summary of Invention

### Technical Problems

The apparatus in Patent Literature 1 carbonizes a single oxidized fiber sheet at a time and thus tends to have low yields.

One or more aspects of the present invention are directed to a manufacturing method and a manufacturing apparatus having high yields.

### Solution to Problems

A manufacturing method according to an aspect of the present invention is a method for manufacturing a carbon fiber electrode substrate by feeding an oxidized fiber substrate through a carbonization furnace to carbonize the oxidized fiber substrate. The method includes feeding, through the carbonization furnace, a plurality of oxidized fiber substrates arranged in a thickness direction of the oxidized fiber substrates.

A manufacturing apparatus according to another aspect of the present invention is an apparatus for manufacturing a carbon fiber electrode substrate by feeding an oxidized fiber substrate through a carbonization furnace to carbonize the oxidized fiber substrate. The apparatus includes a feeding unit that feeds, through the carbonization furnace, a plurality of oxidized fiber substrates arranged in a thickness direction of the oxidized fiber substrates.

### Advantageous Effects of Invention

The manufacturing method according to the above aspect of the present invention can increase the yield of carbon fiber electrode substrates.

### Brief Description of Drawings

FIG. 1A is a schematic top cross-sectional view of a manufacturing apparatus according to example 1 taken in a direction orthogonal to a thickness direction.
FIG. 1B is a schematic side cross-sectional view of the manufacturing apparatus according to example 1 taken in a direction orthogonal to a width direction.
FIG. 2A is a schematic top cross-sectional view of a manufacturing apparatus according to example 2 taken in a direction orthogonal to a thickness direction.

FIG. 2B is a schematic side cross-sectional view of the manufacturing apparatus according to example 2 taken in a direction orthogonal to a width direction.

FIG. 3A is a schematic top cross-sectional view of a manufacturing apparatus according to example 3 taken in a direction orthogonal to a thickness direction.

FIG. 3B is a schematic side cross-sectional view of the manufacturing apparatus according to example 3 taken in a direction orthogonal to a width direction.

FIG. 4A is a schematic top cross-sectional view of a manufacturing apparatus according to example 4 taken in a direction orthogonal to a thickness direction.

FIG. 4B is a schematic side cross-sectional view of the manufacturing apparatus according to example 4 taken in a direction orthogonal to a width direction.

FIG. 5A is a schematic top cross-sectional view of a manufacturing apparatus according to example 5 taken in a direction orthogonal to a thickness direction.

FIG. 5B is a schematic side cross-sectional view of the manufacturing apparatus according to example 5 taken in a direction orthogonal to a width direction.

FIG. 6A is a schematic top cross-sectional view of a manufacturing apparatus according to example 6 taken in a direction orthogonal to a thickness direction.

FIG. 6B is a schematic side cross-sectional view of the manufacturing apparatus according to example 6 taken in a direction orthogonal to a width direction.

FIG. 7A is a schematic top cross-sectional view of a manufacturing apparatus according to example 7 taken in a direction orthogonal to a thickness direction.

FIG. 7B is a schematic side cross-sectional view of the manufacturing apparatus according to example 7 taken in a direction orthogonal to a width direction.

FIG. 8A is a schematic top cross-sectional view of a manufacturing apparatus according to example 8 taken in a direction orthogonal to a thickness direction.

FIG. 8B is a schematic side cross-sectional view of the manufacturing apparatus according to example 8 taken in a direction orthogonal to a width direction.

FIG. 9A is a schematic top cross-sectional view of a manufacturing apparatus according to example 9 taken in a direction orthogonal to a thickness direction.

FIG. 9B is a schematic side cross-sectional view of the manufacturing apparatus according to example 9 taken in a direction orthogonal to a width direction.

**Description of Embodiments**

Overview

A manufacturing method according to an aspect of one or more embodiments is a method for manufacturing a carbon fiber electrode substrate by feeding an oxidized fiber substrate through a carbonization furnace to carbonize the oxidized fiber substrate. The method includes feeding, through the carbonization furnace, a plurality of oxidized fiber substrates arranged in a thickness direction of the plurality of oxidized fiber substrates.

With a manufacturing method according to another aspect, the plurality of oxidized fiber substrates are fed through a first carbonization furnace and a second carbonization furnace in sequence from upstream in a direction in which the plurality of oxidized fiber substrates are fed. This allows the manufacture of carbon fiber electrode substrates with a high grade.

A manufacturing apparatus according to an aspect of one or more embodiments is an apparatus for manufacturing a carbon fiber electrode substrate by feeding an oxidized fiber substrate through a carbonization furnace to carbonize the oxidized fiber substrate. The apparatus includes a feeding unit that feeds, through the carbonization furnace, a plurality of oxidized fiber substrates arranged in a thickness direction of the plurality of oxidized fiber substrates.

In a manufacturing apparatus according to another aspect, the carbonization furnace includes a first carbonization furnace and a second carbonization furnace in sequence from upstream in a direction in which the oxidized fiber substrates are fed. This allows the manufacture of carbon fiber electrode substrates with a high grade.

Embodiments

1. Overview

Carbon fiber electrode substrates according to one or more embodiments are manufactured by feeding, through a carbonization furnace, multiple oxidized fiber substrates arranged in a thickness direction.

A direction orthogonal to the feeding direction and the thickness direction of the oxidized fiber substrates is defined as a width direction.

2. Oxidized Fiber Substrate

An oxidized fiber substrate fed through the carbonization furnace may be obtained by, for example, forming precursor fibers into a sheet of felt or woven fabric (as a precursor fiber substrate) and oxidizing the sheet, or may be obtained by oxidizing precursor fibers and forming the oxidized fibers into a sheet of felt or woven fabric.

Such usable precursor fibers may be, for example, one or more of a polyacrylonitrile (PAN) fiber, a rayon fiber, a cellulose fiber, and a pitch fiber.

The oxidization is treatment (also referred to as oxidation) of the precursor fibers or the precursor fiber substrate at 200 to 400 °C in air. This treatment causes a cyclization reaction in the oxidized fibers or the oxidized fiber substrate, increasing oxygen bonds to achieve infusibility and flame retardancy.

For oxidized fibers formed from precursor fibers that are PAN fibers, although the oxidized fibers may have any density, the density may be 1.33 to 1.45 $g/cm^3$ based on Archimedes' principle. When the density of the oxidized fibers is too low, the carbonization process tends to be unstable due to the great contraction of the fibers. When the density of the oxidized fibers is too high, the fibers are breakable, and the fiber substrate tends to be produced less efficiently by felting or weaving.

The oxidized fiber substrates fed through the carbonization furnace in one or more embodiments of the present invention are fiber substrates formed from oxidized fibers and shaped into sheets (hereafter, sheet fiber substrates) before feeding into the carbonization furnace, and precursor fibers may be formed into sheet fiber substrates before being oxidized, or oxidized fibers may be formed into sheet fiber substrates. For productivity, the oxidized fiber substrates may be obtained by forming oxidized fibers into sheet fiber substrates.

Example methods for forming sheet fiber substrates and the forms of the sheet fiber substrates include a paper sheet by papermaking, a non-woven fabric by water jetting, a non-woven fabric (felt) by felting such as needle punching, a filament fabric by weaving, and a spun-yarn fabric by spinning and weaving. In one or more embodiments of the present invention, the sheet fiber substrates may be non-woven fabric (felt) by felting such as needle punching or filament fabric (in particular, multilayered fabric) by weaving because of the ease of obtaining oxidized fiber substrates with fibers oriented in the thickness direction. A sheet fiber substrate for ease of handling and for productivity may specifically be non-woven fabric (felt) by felting such as needle punching.

To obtain non-woven fabric by felting, oxidized fibers used as raw materials may have a linear density of 0.1 to 5.0 dtex, specifically 0.5 to 3.5 dtex, and more specifically 1.0 to 3.3 dtex. When the linear density of the oxidized fibers is too low, the openability is low, and uniform mixing is difficult. When the linear density of the oxidized fibers is too high, high-strength felt is difficult to obtain. The oxidized fibers subjected to felting may be used as a staple. The oxidized fiber staple may have a fiber length of 30 to 75 mm, a linear density of 0.5 to 3.5 dtex, 4 to 20 crimps/2.54 cm, and a crimp percentage of 4 to 20%. The crimp percentage is a value calculated by measurement in accordance with JIS L1096-1999 (1999), Determination of Crimp of Yarn in Fabric.

To form felt by needle punching, the needle may be punched (interlacing may be performed) 300 to 3,000 times/$cm^2$. For too few sticks, the felt may have a lower strength. Additionally, the degree of fiber alignment in the thickness direction may decrease, and the electric resistance in the thickness direction may increase. For too many sticks, interlacing may greatly damage the fibers and cause fuzzy fiber shedding. In the needle punching, the needle may be stuck into one side or both sides of the punching surface.

Each oxidized fiber substrate may have a thickness of 0.5 to 30 mm, an area weight of 30 to 4,000 $g/m^2$, and a width of 10 to 2,000 mm.

For an oxidized fiber substrate having a thickness of less than 0.5 mm, the fiber substrate may have a lower strength during carbonization and easily break or crack. For an oxidized fiber substrate having a thickness of more than 30 mm, the carbon fiber electrode substrate obtained is less likely to have stable dimensions.

For an oxidized fiber substrate having an area weight of less than 30 $g/m^2$, the fiber substrate may have a lower strength during carbonization and easily break or crack. For an oxidized fiber substrate having an area weight of more than 4,000 $g/m^2$, the carbon fiber electrode substrate obtained is less likely to have stable dimensions.

For an oxidized fiber substrate having a width of less than 10 mm, the fiber substrate may have a lower strength during carbonization and easily break or crack. For less than 10 mm, the productivity may not increase sufficiently. For an oxidized fiber substrate having a width of more than 2,000 mm, the thickness and the area weight of the fiber substrate tend to vary greatly in the width direction.

The oxidized fiber substrate may have a bulk density of 0.001 to 8.0 $g/cm^3$. In one or more embodiments of the present invention, the bulk density can be determined using the equation:

$$\text{Bulk density (g/cm}^3) = \text{Area weight (g/m}^2)/\text{Thickness (mm)}/1{,}000.$$

In one or more embodiments of the present invention, the oxidized fiber substrate may have a fiber orientation of 1 to 50%, and specifically 5 to 40%, in the thickness direction. The fiber orientation in the thickness direction within the range allows the production of a carbon fiber electrode substrate having a high conductivity also in the thickness direction.

In one or more embodiments of the present invention, the fiber orientation in the thickness direction is calculated using X-ray diffractometry as described below.

At the X-ray diffraction peak angle ($2\theta$ = about 26.0 degrees), the sample is subjected to X-ray diffractometry on its Z-X plane (A) and Z-Y plane (B) while being rotated by 360 degrees, and the orientation peak of crystallites is obtained based on the change in X-ray diffraction behavior. Because crystallites are highly oriented in a fiber axis direction, the direction of the crystallite orientation is determined as the fiber axis direction, the orientation peak area is measured, and the degree of fiber orientation in the thickness direction is determined using the equation:

Degree of fiber orientation in thickness direction (Z)

= Z-directional orientation peak area/(X + Y + Z)-directional orientation peak area

= 1/[(X-directional orientation peak area/Z-directional orientation peak area) + (Y-directional orientation peak area)/(Z-directional orientation peak area) + 1].

3. Carbonization Furnace

The above oxidized fiber substrate is carbonized in an inert atmosphere in a carbonization furnace. At least one carbonization furnace is located in a direction in which the oxidized fiber substrate is fed. One or more carbonization furnaces may be located in the feeding direction, and specifically two or more carbonization furnaces may be located. With two or more carbonization furnaces, multiple oxidized fiber substrates arranged in the thickness direction may not be fed through all the carbonization furnaces, but multiple oxidized fiber substrates may be arranged in the thickness direction in any carbonization furnace. For productivity and the quality of the resultant carbon fiber electrode substrates, the layer of oxidized fiber substrates is to be the same in the multiple carbonization furnaces.

(1) For One Carbonization Furnace

In the example described below, a single carbonization furnace is used.

Although being adjustable in accordance with the feeding speed of the oxidized fiber substrates, the maximum temperature in the carbonization furnace may be 1,000 to 2,300 °C, and more specifically 1,200 to 2,000 °C. Although the carbonization furnace may have any minimum temperature, the minimum temperature may be higher than the temperature of an oxidization furnace and specifically 300 to 500 °C. The tension applied to the oxidized fiber substrates being fed may be 0.5 to 100 N per oxidized fiber substrate, and more specifically 1 to 50 N. The carbonization furnace may have a temperature rise gradient of 50 to 500 °C/min in the temperature range of 500 to 1,000 °C. The carbonization furnace may not have a temperature rise gradient. The time of residence in the carbonization furnace, in an area in which the oxidized fiber substrates are substantially heated, may be 0.5 to 120 minutes, specifically 1 to 30 minutes, and more specifically 2 to 10 minutes.

The feeding speed of the oxidized fiber substrates may be 0.5 to 200 m/hr, and specifically 5 to 150 m/hr.

In this manner, the determination of the carbonization furnace temperature and the tension allows the oxidized fiber substrates to be carbonized without breaking into intended carbon fiber electrode substrates.

(2) For Two Carbonization Furnaces

In the example described below, two heat treatments are used.

The carbonization furnace located upstream in the feeding direction is defined as a first carbonization furnace, and the carbonization furnace located downstream is defined as a second carbonization furnace. The temperature of the first carbonization furnace is lower than the temperature of the second carbonization furnace and higher than the oxidization temperature. In the first carbonization, the oxidized fiber substrate may be heated in an inert atmosphere at a maximum temperature of 400 to 1,000 °C. In the second carbonization, the fiber substrates after the first carbonization (also referred to as the first carbonized fiber substrates) may be heated in an inert atmosphere at a maximum temperature of 1,000 to 2,300 °C. The first carbonization is performed when the oxidized fiber substrates pass through the first carbonization furnace, and the second carbonization is performed when the first carbonized fiber substrates pass through the second carbonization furnace.

The second carbonization may specifically have a maximum temperature within the range of 1,200 to 2,300 °C. A carbonization furnace having a much higher temperature may be located downstream from the second carbonization furnace. Although any number of carbonization furnaces may be located in the feeding direction, three or less carbonization furnaces may be used for productivity.

In the temperature range of the first carbonization furnace, the oxidized fiber substrates emit much decomposition gas due to the changed chemical structure involving the desorption of heterogeneous elements. For ease of processing of the cracked gas and controlling reactions, the carbonization may be divided into two phases within the above temperature ranges.

The first carbonization may provide first carbonized fiber substrates having a specific weight of 1.5 to 1.6 g/cm$^3$ based on Archimedes' principle, and specifically 1.54 to 1.60 g/cm$^3$.

The first carbonization furnace may have a maximum temperature of 400 to 1,000 °C, and specifically 500 to 800 °C. The first carbonization furnace may have a minimum temperature (inlet temperature) of 400 to 500 °C, and specifically 400 to 450 °C. Although the first carbonization furnace may not have a temperature gradient, the gradient may be 500 °C/min or less, and specifically 10 to 200 °C/min. The tension applied to the oxidized fiber substrates being fed may be 0.5 to 100 N per oxidized fiber substrate, and more specifically 1 to 50 N. The time of residence in the first carbonization furnace may be 1 minute or more, specifically 2 to 60 minutes, and more specifically 5 to 30 minutes, although not limited to the ranges.

The second carbonization furnace may have a maximum temperature of 1,000 to 2,300 °C, and specifically 1,200 to 2,000 °C. The tension applied to the first carbonized fiber substrates being fed may be 0.5 to 100 N per fiber substrate, and specifically 1 to 50 N.

Although the second carbonization furnace may have any minimum temperature, the temperature may be equal to or higher than the maximum temperature of the first carbonization furnace. The time of residence in the second carbonization furnace may be 1 minute or more, specifically 2 to 60 minutes, and more specifically 5 to 30 minutes.

The feeding speed of the oxidized fiber substrates and the first carbonized fiber substrates may be 0.5 to 200 m/hr, and specifically 5 to 150 m/hr.

In this manner, the determination of the temperatures and the tensions in the first carbonization furnace and the second carbonization furnace allows the oxidized fiber substrates and the first carbonized fiber substrates to be carbonized into intended carbon fiber electrode substrates without breaking.

(3) Pre-drying Furnace

A pre-drying furnace may be installed upstream from the carbonization furnace(s). A heating furnace having a temperature of 400 °C or more is used as a carbonization furnace, and a heating furnace having a temperature of less than 400 °C is used as a pre-drying furnace or a post-drying furnace.

The pre-drying furnace has a temperature 50 to 300 °C lower than the minimum temperature (inlet temperature) of the upstream carbonization furnace. The oxidized fiber substrates may be preliminarily heat-treated at a temperature lower than 400 °C to remove water and lubricant on the oxidized fiber substrates. The removal of water and lubricant prevents contamination in the carbonization furnaces caused by gas generated from the water and the lubricant, thus preventing trouble in the carbonization and allowing the production of carbon fiber electrode substrates with a high grade. Additionally, the oxidized fiber substrates can be heat-treated with a gentle temperature gradient to reduce heat strain on the oxidized fiber substrates.

4. Carbonization of Oxidized Fiber Substrate

(1) Arrangement

Multiple oxidized fiber substrates may be arranged in the thickness direction by layering the oxidized fiber substrates in or out of contact with each other. The contact may be established at one or more sites arranged in the feeding direction (e.g., at three sites, or namely, the center and the two ends as viewed in the feeding direction), or established between particular oxidized fiber substrates placed in the thickness direction (e.g., with the first and second substrates in contact, the third and fourth in contact, and the second and third out of contact).

The layer of oxidized fiber substrates herein refers to oxidized fiber substrates adjacent in the thickness direction in contact, out of contact, or partly in contact with each other.

With both a contact site and a noncontact site included in the feeding direction, the degree of carbonization tends to vary, and thus the contact state in the feeding direction is to be unchanged.

(2) Number of Substrates

The maximum number of oxidized fiber substrates depends on the thickness and the area weight of a single oxidized fiber substrate. For example, the upper limit is the number of oxidized fiber substrates constituting 50 to 90% or less of the cross-sectional area of the carbonization furnace space through which the substrates are fed.
The feeding of substrates exceeding the upper limit may cause insufficient carbonization or increase fragility due to insufficient discharge (adherence) of gas generated by thermal reactions.

(3) Feeding Direction

The direction in which the oxidized fiber substrates are fed may be a horizontal direction, a direction oblique to the horizontal direction, a vertical direction, a direction oblique to the vertical direction, or a combination of the horizontal direction (including oblique directions) and the vertical direction (including oblique directions).
As an example combination of the horizontal direction and the vertical direction, for two carbonization furnaces, the substrates are fed through the first carbonization furnace in the horizontal direction and then through the second carbonization furnace in the vertical direction. For efficient discharge of the gas generated in the furnaces, the oxidized fiber substrates may be fed through the first carbonization furnace in the horizontal direction (including directions at oblique angles of 45 degrees or less to the horizontal direction).

(4) Feeding Method

The oxidized fiber substrates may be fed through each furnace out of contact with the furnace floor, the furnace wall, and the furnace ceiling or in contact with the furnace floor, the furnace wall, and the furnace ceiling. For example, the oxidized fiber substrates may be fed (conveyed) by a roller conveyor, a belt conveyor, or multiple rollers (which may include nip rollers) spaced in the feeding direction. In other examples, the carbon fiber electrode substrates obtained by carbonizing the oxidized fiber substrates are wound around bobbins, and the force of winding the carbon fiber electrode substrates may be used to feed the substrates.

Examples

Examples will now be described.

1. Example 1

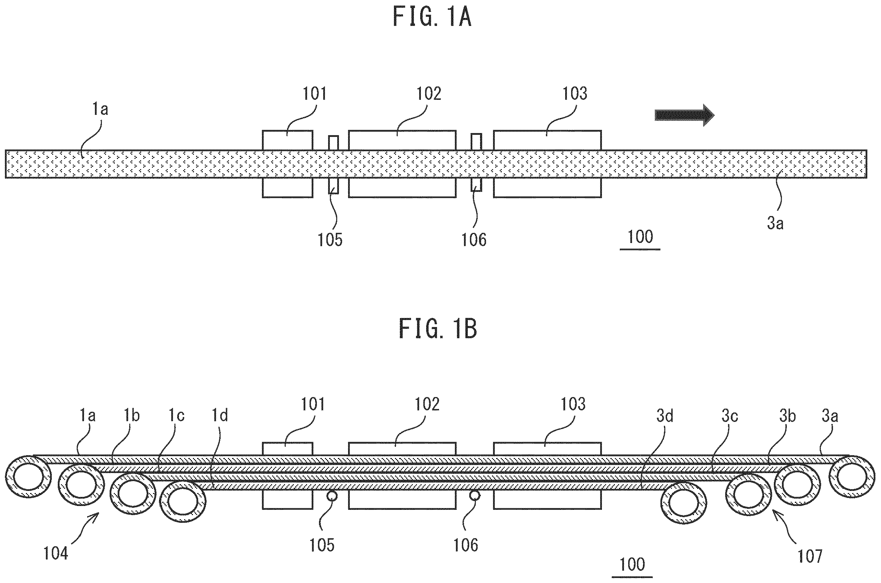

Example 1 will now be described with reference to FIGs. 1A and 1B.
A manufacturing apparatus 100 in example 1 includes a pre-drying furnace 101, a first carbonization furnace 102, and a second carbonization furnace 103 in sequence in the direction in which oxidized fiber substrates (1a to 1d) are fed (indicated by an arrow in FIG. 1A). In this example, the feeding direction is a horizontal direction. In this example, four oxidized fiber substrates are fed. The oxidized fiber substrates are given reference numerals 1a, 1b, 1c, and 1d sequentially from one end (above) in the thickness direction, and the multiple oxidized fiber substrates are collectively denoted by 1a to 1d.
The first carbonization furnace 102 and the second carbonization furnace 103 are included in a carbonization furnace. When being fed through the first carbonization furnace 102 and the second carbonization furnace 103, the multiple oxidized fiber substrates 1a to 1d are carbonized into carbon fiber electrode substrates. Four carbon fiber electrode substrates, which correspond in number to the oxidized fiber substrates (1a to 1d), are fed. The carbon fiber electrode substrates are given reference numerals 3a, 3b, 3c, and 3d sequentially from one end (above) in the thickness direction, and the multiple carbon fiber electrode substrates are denoted by 3a to 3d.
The carbon fiber electrode substrates refer to substrates fed through all carbonization furnaces (in this example, the first carbonization furnace and the second carbonization furnace), and substrates immediately after traveling through the first carbonization furnace 102 are still oxidized fiber substrates.
The manufacturing apparatus 100 includes a feeder 104 that layers the multiple oxidized fiber substrates 1a to 1d in the thickness direction and feeds the substrates to the pre-drying furnace 101.
The manufacturing apparatus 100 includes conveyors 105 and 106 that convey the multiple oxidized fiber substrates 1a to 1d fed in the pre-drying furnace 101 to the first carbonization furnace 102, and convey the multiple oxidized fiber substrates 1a to 1d fed in the first carbonization furnace 102 to the second carbonization furnace 103.
The manufacturing apparatus 100 includes a receiver 107 that receives the carbon fiber electrode substrates 3a to 3d resulting from the carbonization in the first carbonization furnace 102 and the second carbonization furnace 103.

The oxidized fiber substrates 1a to 1d are 600 mm wide and 2 mm thick.

The feeder 104 uses the oxidized fiber substrates 1a to 1d wound around bobbins, and includes a holder that detachably holds the bobbins around which the oxidized fiber substrates 1a to 1d are wound and a drive that rotates the held bobbins toward the pre-drying furnace 101. The rotation sends the oxidized fiber substrates 1a to 1d wound around the bobbins toward the pre-drying furnace 101.

Depending on the types of the receiver 107 and the conveyors 105 and 106 described later, the feeder 104 may include a rotatable holder holding the bobbins but may not include the drive.

The multiple oxidized fiber substrates 1a to 1d are four sheets layered in the thickness direction, and the opposite surfaces of the oxidized fiber substrates 1a to 1d adjacent in the thickness direction are in contact with each other.

The multiple layered oxidized fiber substrates 1a to 1d are supported from the other end (below) in the thickness direction by the conveyor 105 located between the pre-drying furnace 101 and the first carbonization furnace 102, and the conveyor 106 located between the first carbonization furnace 102 and the second carbonization furnace 103.

The feeder 104 in this example feeds the multiple layered oxidized fiber substrates 1a to 1d in a single line arranged in the width direction.

The pre-drying furnace 101 is a heating furnace with an internal temperature set at 300 to 400 °C (lower than the temperature of the first carbonization furnace). The first carbonization furnace 102 is a heating furnace with an internal temperature set at 400 to 900 °C. The second carbonization furnace 103 is a heating furnace with an internal temperature set at 900 to 1,800 °C, which is higher than the temperature of the first carbonization furnace 102.

The conveyors 105 and 106 in this example include rollers, and support and convey the layered oxidized fiber substrates 1a to 1d using a single roller. At least one of the conveyors 105 or 106 includes a drive roller.

Depending on the types of the feeder 104 and the receiver 107, the conveyors 105 and 106 may include a free roller rotated by the movement of the oxidized fiber substrate 1a.

The receiver 107 rewinds the carbon fiber electrode substrates 3a to 3d around its bobbins, and includes a holder that detachably holds the bobbins and a drive that rotates the held bobbins in the rewinding direction.

The bobbins of the feeder 104 and the receiver 107 and the rollers of the conveyors 105 and 106 have rotational speeds set to feed the oxidized fiber substrates 1a to 1d or the carbon fiber electrode substrates 3a to 3d between the feeder 104 and the receiver 107 under a tension of 0.5 to 30 N. The oxidized fiber substrates 1a to 1d and the carbon fiber electrode substrates 3a to 3d are fed at a rate of 30 to 60 m/hr.

2. Example 2

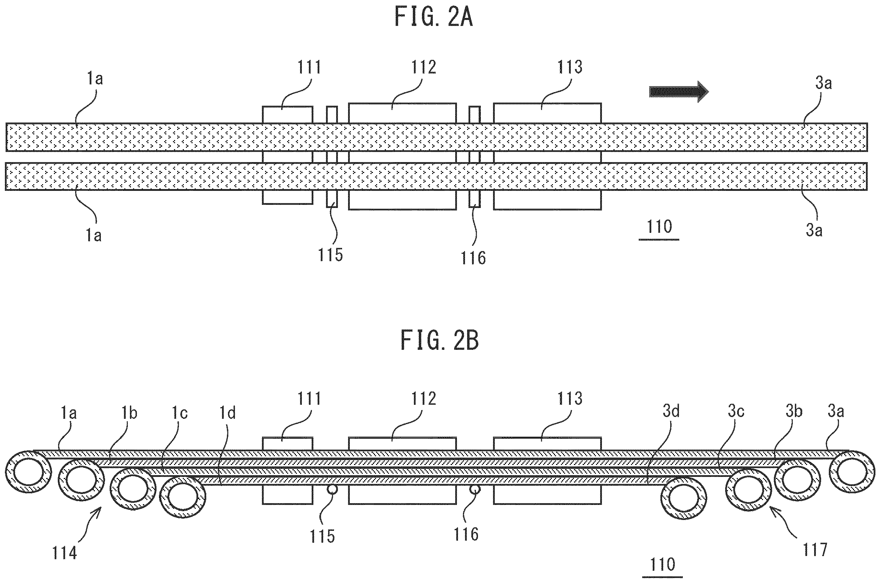

Example 2 will now be described with reference to FIGs. 2A and 2B.

In example 1, the multiple layered oxidized fiber substrates 1a to 1d are fed in a single line to manufacture the carbon fiber electrode substrates 3a to 3d. More specifically, the manufacturing apparatus 100 feeds the multiple layered oxidized fiber substrates 1a to 1d in a single line arranged in the width direction to manufacture the multiple carbon fiber electrode substrates 3a to 3d in a single line.

A manufacturing apparatus 110 in example 2 feeds multiple layered oxidized fiber substrates 1a to 1d in multiple lines (in this example, two lines) arranged in the width direction to manufacture carbon fiber electrode substrates 3a to 3d in multiple lines (in this example, two lines). More specifically, the manufacturing apparatus 110 feeds the multiple layered oxidized fiber substrates 1a to 1d in multiple lines (in this example, two lines) arranged in the width direction to manufacture the multiple carbon fiber electrode substrates 3a to 3d in multiple lines (in this example, two lines).

In the same manner as in example 1, the manufacturing apparatus 110 includes a pre-drying furnace 111, a first carbonization furnace 112, and a second carbonization furnace 113 in sequence in the direction in which the oxidized fiber substrates 1a to 1d are fed. The direction in which the oxidized fiber substrates 1a to 1d are fed is a horizontal direction (indicated by an arrow in FIG. 2A).

The manufacturing apparatus 110 includes a feeder 114 that arranges the multiple oxidized fiber substrates 1a to 1d in the thickness direction and feeds the substrates to the pre-drying furnace 111 in multiple lines (two lines) arranged in the width direction, conveyors 115 and 116 that convey the oxidized fiber substrates 1a to 1d from the pre-drying furnace 111 to the second carbonization furnace 113, and a receiver 117 that receives the carbon fiber electrode substrates 3a to 3d resulting from the carbonization in the first carbonization furnace 112 and the second carbonization furnace 113.

The pre-drying furnace 111, the first carbonization furnace 112, the second carbonization furnace 113, and the conveyors 115 and 116 are longer in the width direction than the pre-drying furnace 101, the first carbonization furnace 102, the second carbonization furnace 103, and the conveyors 105 and 106 in example 1, and have substantially the same structure.

The feeder 114 and the receiver 117 at least include holders that hold bobbins arranged in multiple lines, and rotors that drive and rotate the bobbins in the multiple lines.

These modifications in example 1 may apply to example 2.

3. Example 3

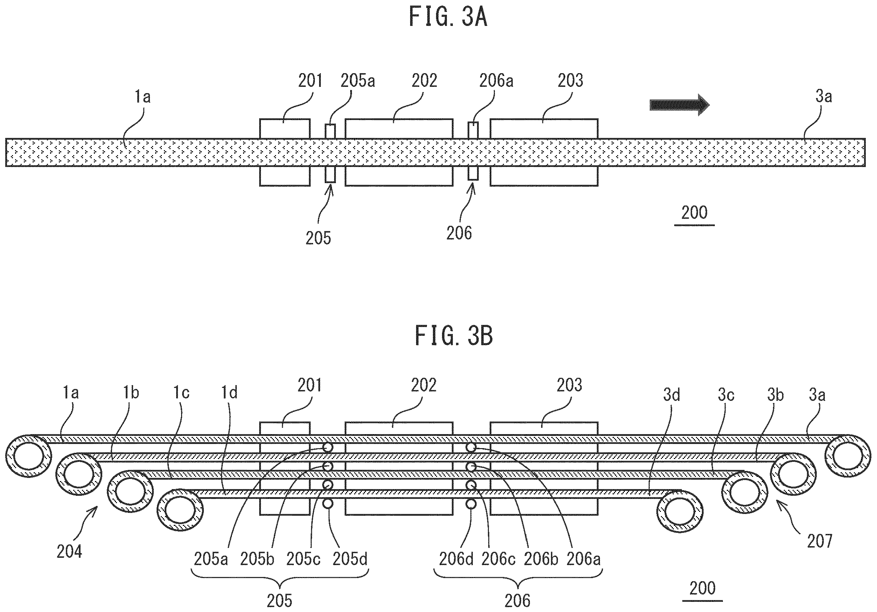

Example 3 will now be described with reference to FIGs. 3A and 3B.
In example 1, the multiple oxidized fiber substrates 1a to 1d fed through the pre-drying furnace 101 and other furnaces are in contact with each other in the thickness direction.
A manufacturing apparatus 200 in example 3 spaces multiple oxidized fiber substrates 1a to 1d from each other in the thickness direction and feeds the substrates in a single line or multiple lines (in this example, a single line) arranged in the width direction to manufacture carbon fiber electrode substrates 3a to 3d in a single line or multiple lines (in this example, a single line).
In the same manner as in example 1, the manufacturing apparatus 200 includes a pre-drying furnace 201, a first carbonization furnace 202, and a second carbonization furnace 203 in sequence in the direction in which the oxidized fiber substrates 1a to 1d are fed. The direction in which the oxidized fiber substrates 1a to 1d are fed is a horizontal direction (indicated by an arrow in FIG. 3A).
The manufacturing apparatus 200 includes a feeder 204 that spaces the multiple oxidized fiber substrates 1a to 1d in the thickness direction and feeds the substrates to the pre-drying furnace 201 in a single line or multiple lines (in this example, a single line) arranged in the width direction, conveyors 205 and 206 that convey the oxidized fiber substrates 1a to 1d from the pre-drying furnace 111 to the second carbonization furnace 113 with the substrates spaced from each other in the thickness direction, and a receiver 207 that receives the carbon fiber electrode substrates 3a to 3d resulting from the carbonization in the first carbonization furnace 112 and the second carbonization furnace 113.
The pre-drying furnace 201, the first carbonization furnace 202, and the second carbonization furnace 203 are longer in the thickness direction than the pre-drying furnace 101, the first carbonization furnace 102, and the second carbonization furnace 103 in example 1, and have substantially the same structure.
The feeder 204 and the receiver 207 at least include holders that are spaced from each other in the thickness direction and hold multiple bobbins, and rotors that drive and rotate the held bobbins.
The conveyors 205 and 206 in this example include rollers, or specifically rollers 205a to 205d and 206a to 206d arranged between the oxidized fiber substrates 1a to 1d fed at a distance from each other in the thickness direction. The rollers 205a to 205d and 206a to 206d support the oxidized fiber substrates 1a to 1d from below and convey the substrates. At least one of the conveyors 205 or 206 includes a drive roller.
In example 3, although the multiple oxidized fiber substrates 1a to 1d are fed in a single line arranged in the width direction, the multiple oxidized fiber substrates 1a to 1d may be fed in multiple lines arranged in the width direction, like example 2 with respect to example 1. These modifications in example 1 may apply to example 3.

4. Example 4

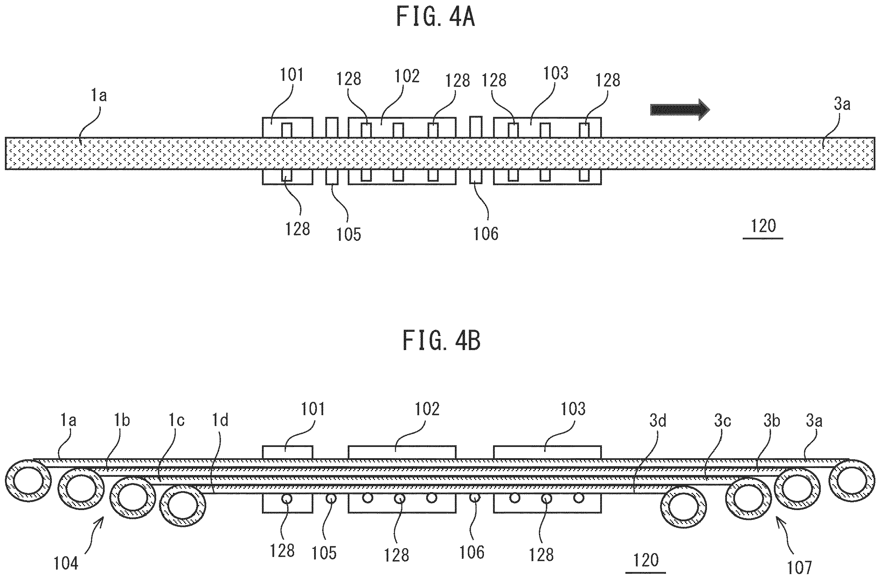

Example 4 will now be described with reference to FIGs. 4A and 4B.
In example 1, the multiple layered oxidized fiber substrates 1a to 1d supported by the conveyors 105 and 106 are conveyed.
A manufacturing apparatus 120 in example 4 includes one or more support 128 that support multiple oxidized fiber substrates 1a to 1d in a pre-drying furnace 101, a first carbonization furnace 102, and a second carbonization furnace 103 while the substrates are being fed through the furnaces. The supports 128 are arranged in the furnaces in the direction in which the oxidized fiber substrates 1a to 1d are fed. In this example, the pre-drying furnace 101 includes one support, and the first carbonization furnace 102 and the second carbonization furnace 103 each include three supports.
The manufacturing apparatus 120 includes a feeder 104, conveyors 105 and 106, and a receiver 107. The same or corresponding components as in example 1 are given the same reference numerals as in example 1 and will not be described.
The supports 128 are bars extending in the width direction. The supports 128 support the multiple oxidized fiber substrates 1a to 1d from below. Each bar has a cross section curved in an arc in at least the area in contact with the oxidized fiber substrate 1d. The bars in this example have a circular cross section. The supports 128 may be stationary or rotational bars. The rotational bars are less likely to cause frictional damage to the oxidized fiber substrate 1d.
In example 4, although the multiple oxidized fiber substrates 1a to 1d are fed in a single line arranged in the width direction, the multiple oxidized fiber substrates 1a to 1d may be fed in multiple lines arranged in the width direction, like example 2 with respect to example 1. These modifications in example 1 may apply to example 4.

5. Example 5

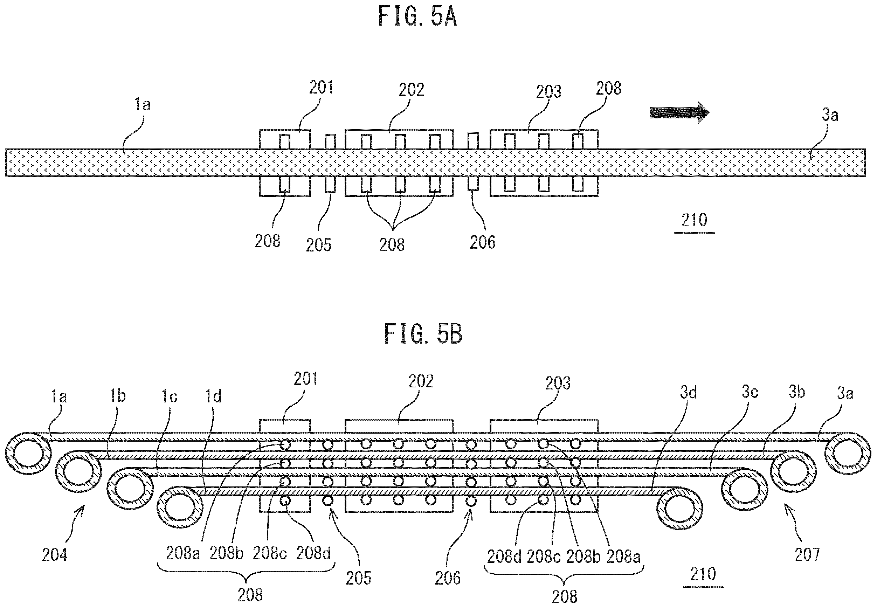

Example 5 will now be described with reference to FIGs. 5A and 5B.

In example 3, the multiple oxidized fiber substrates 1a to 1d arranged in the thickness direction are supported and conveyed on the conveyors 205 and 206.

A manufacturing apparatus 210 in example 5 includes a pre-drying furnace 201, a first carbonization furnace 202, a second carbonization furnace 203, a feeder 204, conveyors 205 and 206, and a receiver 207. The same or corresponding components as in example 3 are given the same reference numerals as in example 3 and will not be described.

The manufacturing apparatus 210 includes supports 208 that support multiple oxidized fiber substrates 1a to 1d in the pre-drying furnace 201, the first carbonization furnace 202, and the second carbonization furnace 203 while the substrates are being fed through the furnaces. The supports 208 support the oxidized fiber substrates 1a to 1d from below. The supports 208 include one more sets of supports that are arranged in the furnaces in the direction in which the oxidized fiber substrates 1a to 1d are fed. In this example, the pre-drying furnace 201 includes one set of supports 208, and the first carbonization furnace 202 and the second carbonization furnace 203 each include three sets of supports 208.

One set of supports 208 include bars 208a to 208d extending in the width direction and spaced in the thickness direction. Each bar has a cross section curved in an arc in at least the area in contact with the oxidized fiber substrates 1a to 1d. The bars in this example have a circular cross section. The supports 208 may be stationary or rotational bars. The rotational bars are less likely to cause frictional damage to the oxidized fiber substrates 1a to 1d.

In example 5, although the multiple oxidized fiber substrates 1a to 1d are fed in a single line arranged in the width direction, the multiple oxidized fiber substrates 1a to 1d may be fed in multiple lines arranged in the width direction, like example 2 with respect to example 1. These modifications in example 1 may apply to example 5.

6. Example 6

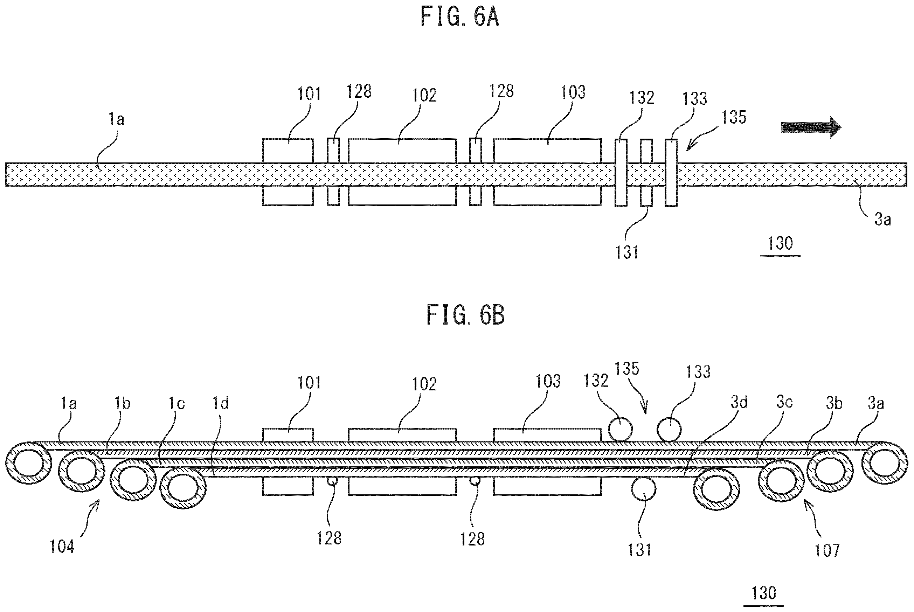

Example 6 will now be described with reference to FIGs. 6A and 6B.

In example 1, the multiple layered oxidized fiber substrates 1a to 1d are supported and conveyed on the conveyors 105 and 106 including the rollers.

A manufacturing apparatus 130 in example 6 includes a conveyor 135 including rollers 131, 132, and 133 arranged on the total body of the multiple oxidized fiber substrates 1a to 1d at the top and the bottom opposite in the thickness direction.

The manufacturing apparatus 130 includes a pre-drying furnace 101, a first carbonization furnace 102, a second carbonization furnace 103, a feeder 104, a receiver 107, a support 128, and the conveyor 135. The same or corresponding components as in example 1 or 4 are given the same reference numerals as in example 1 or 4 and will not be described.

The conveyor 135 is installed at least one position selected from being upstream from the pre-drying furnace 101, between the pre-drying furnace 101 and the first carbonization furnace 102, between the first carbonization furnace 102 and the second carbonization furnace 103, or downstream from the second carbonization furnace 103. The conveyor 135 in this example is installed downstream from the second carbonization furnace 103. The oxidized fiber substrates 1a to 1d have a higher degree of carbonization at a downstream site, and the conveyor 135 located downstream is more likely to prevent the oxidized fiber substrates 1a to 1d from breaking.

The conveyor 135 includes one or more rollers that come from outside in the thickness direction into contact with one or both of the oxidized fiber substrates 1a and 1d, which are positioned at both the ends opposite in the thickness direction of the multiple oxidized fiber substrates 1a to 1d arranged in the thickness direction. In this example, the roller 131 is in contact with one (the lower) end of the oxidized fiber substrate 1a in the thickness direction, and the rollers 132 and 133 are in contact with the other (the upper) end of the oxidized fiber substrate 1d in the thickness direction. The rollers 132 and 133 are spaced in the feeding direction.

The manufacturing apparatus 130 includes the support 128 at least one position selected from being upstream from the pre-drying furnace 101, between the pre-drying furnace 101 and the first carbonization furnace 102, or between the first carbonization furnace 102 and the second carbonization furnace 103. The support 128 in this example, which is the same or corresponding component as the supports 128 in example 4, is given the same reference numeral as in example 4 and will not be described.

The support 128 supports the oxidized fiber substrates 1a to 1d from the side that receives the weight of the multiple oxidized fiber substrates 1a to 1d (below).

In addition to the conveyor 135 downstream from the second carbonization furnace 103, a manufacturing apparatus may include conveyors 105 and 106 (refer to example 1) at least between the pre-drying furnace 101 and the first carbonization furnace 102 or between the first carbonization furnace 102 and the second carbonization furnace 103.

In example 6, although the multiple oxidized fiber substrates 1a to 1d are fed in a single line arranged in the width direction, the multiple oxidized fiber substrates 1a to 1d may be fed in multiple lines arranged in the width direction, like example 2 with respect to example 1. These modifications in example 1 may apply to example 6.

7. Example 7

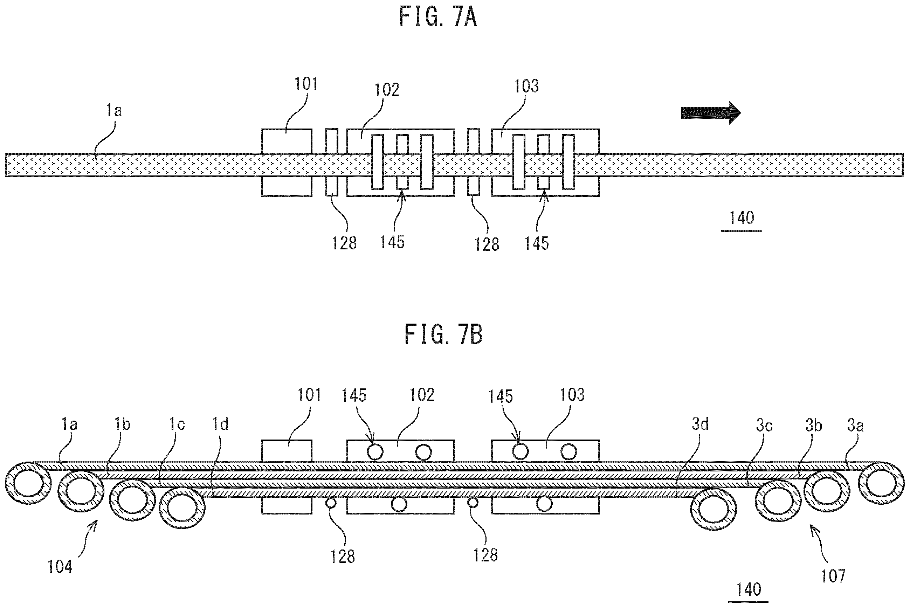

Example 7 will now be described with reference to FIGs. 7A and 7B.

The conveyor 135 in example 6 is located outside the second carbonization furnace 103.

A manufacturing apparatus 140 in example 7 includes a conveyor 145 in at least one of a pre-drying furnace 101, a first carbonization furnace 102, or a second carbonization furnace 103. In this example, the conveyor 145 is located in each of the first carbonization furnace 102 and the second carbonization furnace 103.

The manufacturing apparatus 140 includes the pre-drying furnace 101, the first carbonization furnace 102, the second carbonization furnace 103, a feeder 104, a receiver 107, a support 128, and the conveyors 145. The same or corresponding components as in example 1 or 4 are given the same reference numerals as in example 1 or 4 and will not be described.

A manufacturing apparatus may include conveyors 145 inside a pre-drying furnace 101, a first carbonization furnace 102, and a second carbonization furnace 103 and also a conveyor 135 outside the pre-drying furnace 101, the first carbonization furnace 102, and the second carbonization furnace 103.

A manufacturing apparatus may include a conveyor 145 inside a furnace and at least one of conveyors 105 or 106 described in example 1 outside the furnaces. A manufacturing apparatus may include a conveyor 145 inside a furnace, a conveyor 135 outside a pre-drying furnace 101, a first carbonization furnace 102, and a second carbonization furnace 103, and conveyors 105 and 106 described in example 1 outside the furnaces. A manufacturing apparatus may include a conveyor 145 and a support 128 described in example 4 inside a furnace.

In example 7, although the multiple oxidized fiber substrates 1a to 1d are fed in a single line arranged in the width direction, the multiple oxidized fiber substrates 1a to 1d may be fed in multiple lines arranged in the width direction, like example 2 with respect to example 1. These modifications in example 1 may apply to example 7.

8. Example 8

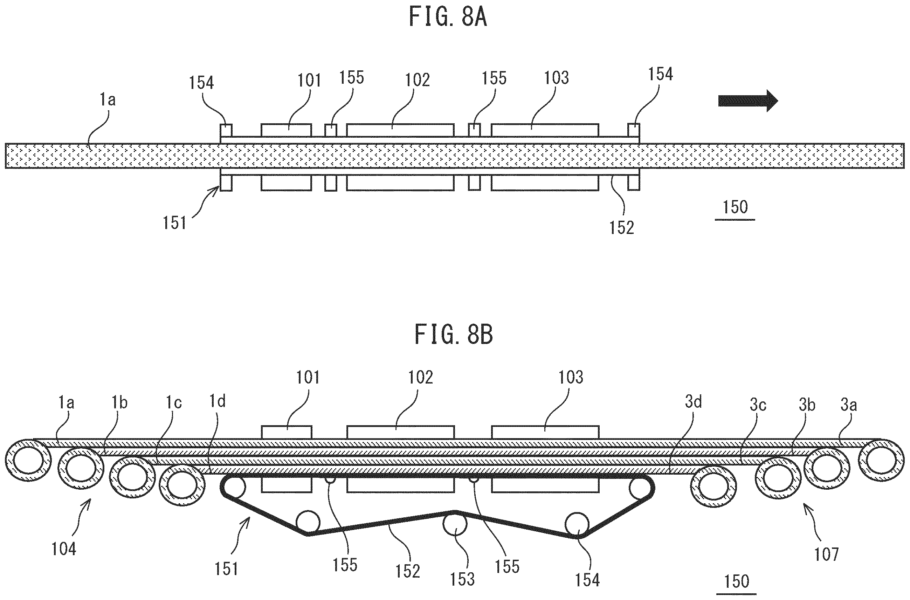

Example 8 will now be described with reference to FIGs. 8A and 8B.

Although the conveyors in examples 1 to 7 include rollers, other conveyors may be used.

A manufacturing apparatus 150 in example 8 includes a conveyor 151 that is a belt conveyor.

The manufacturing apparatus 150 includes a pre-drying furnace 101, a first carbonization furnace 102, a second carbonization furnace 103, a feeder 104, a receiver 107, and the conveyor 151. The same or corresponding components as in example 1 are given the same reference numerals as in example 1 and will not be described.

The conveyor 151 includes a conveyor belt 152, a drive roller 153 that revolves the conveyor belt 152, and guide rollers 154 and 155 that guide the conveyor belt 152.

The conveyor belt 152 travels through the pre-drying furnace 101, the first carbonization furnace 102, and the second carbonization furnace 103 and carries multiple oxidized fiber substrates 1a to 1d from the upstream of the pre-drying furnace 101 to the downstream of the second carbonization furnace 103.

A manufacturing apparatus may include two conveyors 151 that are belt conveyors at both sides opposite in the thickness direction of the multiple layered oxidized fiber substrates 1a to 1d layered in the thickness direction, or may include a conveyor 151 over the top oxidized fiber substrate (1d) of the oxidized fiber substrates 1a to 1d. With a conveyor 151 placed above, a support (e.g., the support 128 in example 6) may be included to support the multiple oxidized fiber substrates 1a to 1d from below.

In example 8, although the multiple oxidized fiber substrates 1a to 1d are fed in a single line arranged in the width direction, the multiple oxidized fiber substrates 1a to 1d may be fed in multiple lines arranged in the width direction, like example 2 with respect to example 1. These modifications in example 1 may apply to example 8.

9. Example 9

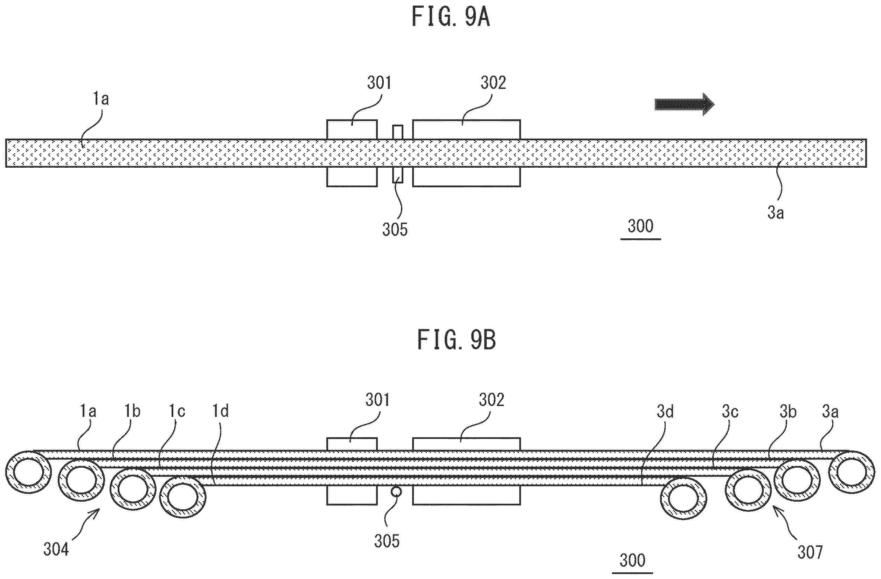

Example 9 will now be described with reference to FIGs. 9A and 9B.

In example 1, the two carbonization furnaces including the first carbonization furnace 102 and the second carbonization furnace 103 are installed for the multiple layered oxidized fiber substrates 1a to 1d to undergo carbonization twice including the first carbonization and the second carbonization.

A manufacturing apparatus 300 in example 9 feeds multiple layered oxidized fiber substrates 1a to 1d through one carbonization furnace 302 in a single line arranged in the width direction to manufacture multiple carbon fiber electrode substrates 3a to 3d in a single line. More specifically, the manufacturing apparatus 300 includes the single carbonization furnace 302 and manufactures the multiple carbon fiber electrode substrates 3a to 3d from the multiple layered oxidized fiber substrates 1a to 1d.

The manufacturing apparatus 300 includes a pre-drying furnace 301 and the carbonization furnace 302 in sequence in the direction in which the oxidized fiber substrates 1a to 1d are fed. The direction in which the oxidized fiber substrates 1a to 1d are fed is the horizontal direction (indicated by an arrow in FIG. 9A).

The manufacturing apparatus 300 includes a feeder 304 that arranges the multiple oxidized fiber substrates 1a to 1d in the thickness direction and feeds the substrates to the pre-drying furnace 301 in a single line arranged in the width direction, a conveyor 305 that conveys the oxidized fiber substrates 1a to 1d from the pre-drying furnace 301 to the carbonization furnace 302, and a receiver 307 that receives the carbon fiber electrode substrates 3a to 3d resulting from the carbonization in the carbonization furnace 302.

The pre-drying furnace 301, the conveyor 305, the feeder 304, and the receiver 307 have substantially the same structures as the pre-drying furnace 101, the conveyor 105, the feeder 114, and the receiver 117 in example 1, but may have different structures.

Example 9 differs from example 1 in that the carbonization furnace 302 is at a higher temperature than the first carbonization furnace 102 in example 1 and the oxidized fiber substrates 1a to 1d are fed at a speed slower than in example 1.

In example 9, although the multiple oxidized fiber substrates 1a to 1d are fed in a single line arranged in the width direction, the multiple oxidized fiber substrates 1a to 1d may be fed in multiple lines in the width direction, like example 2 with respect to example 1. These modifications in example 1 may apply to example 9.

Like examples 2 to 7 with respect to example 1, the manufacturing apparatus may include a support 128 inside a furnace or outside the furnaces, a conveyor 135 outside the furnaces, or a conveyor 145 inside a furnace, or a conveyor device 151 may be installed as in example 8.

Modification

Although described in accordance with the embodiments and the examples, the present invention is not limited to the embodiments and the examples. For example, the examples may be combined as appropriate, any one of the modifications described below may be combined with each example as appropriate, or multiple modifications may be combined as appropriate.

1. Feeding Direction

In examples 1 to 9, although the oxidized fiber substrates are fed in the horizontal direction, the substrates may be fed in the vertical direction. In examples 1 to 8, for example, with the pre-drying furnace, the first carbonization furnace, and the second carbonization furnace may be stacked in the vertical direction. The oxidized fiber substrates having traveled through the pre-drying furnace may be returned to the first carbonization furnace and fed through the first carbonization furnace, and the oxidized fiber substrates having traveled through the first carbonization furnace may be returned to the second carbonization furnace and fed through the second carbonization furnace.

The structure that returns the oxidized fiber substrates may cause wrinkles in the oxidized fiber substrates layered in the thickness direction. This may limit the number of oxidized fiber substrates to be layered.

2. Oxidized Fiber Substrate

The oxidized fiber substrates fed into the pre-drying furnace have been wound around the bobbins. However, for example, the substrates may be folded and contained in a carton or directly fed from the process of manufacturing the oxidized fiber substrates.

3. Carbonization Furnace

The manufacturing apparatuses in examples 1 to 8 each include two carbonization furnaces. However, the manufacturing apparatuses in examples 1 to 8 may also manufacture carbon fiber electrode substrates through one carbonization furnace similarly to the manufacturing apparatus in example 9.

The manufacturing apparatuses in examples 1 to 8 each include two carbonization furnaces, and the oxidized fiber substrates are layered and supported in the same manner for the first carbonization furnace and for the second carbonization furnace. However, the oxidized fiber substrates may be layered and supported in different manners for the first carbonization furnace and for the second carbonization furnace. For example, the manufacturing apparatus may include the first carbonization furnace 102 and the conveyor 105 in example 1 (refer to FIGs. 1A and 1B) and the second carbonization furnace 203, the conveyor 206, and the support 208 in example 5 (refer to FIGs. 5A and 5B). The oxidized fiber substrates may be fed in the layer and supported for the first carbonization furnace 102 in example 1 (refer to FIGs. 1A and 1B) and fed in the layer and supported for the second carbonization furnace 203 in example 5.

4. Carbon Fiber Electrode Substrate

The carbon fiber electrode substrates are rewound around the bobbins. However, for example, the substates may be folded and received in a carton.

The carbon fiber electrode substrates are often used as, for example, fuel cell separators and electrodes. However, the substrates are available for other uses that utilize the conductivity of the substrates. Such a substrate may be referred to as a carbon fiber conductive sheet or a carbon fiber conductive sheet.

Reference Signs List

1a oxidized fiber substrate
3a carbon fiber electrode substrate
100 manufacturing apparatus
102 first carbonization furnace
103 second carbonization furnace
104 feeder
105 conveyor
106 conveyor
107 receiver

**Claims**

1. A method for manufacturing a carbon fiber electrode substrate by feeding an oxidized fiber substrate through a carbonization furnace to carbonize the oxidized fiber substrate, the method comprising:
   feeding, through the carbonization furnace, a plurality of oxidized fiber substrates arranged in a thickness direction of the oxidized fiber substrates.

2. The method according to claim 1, wherein
   the plurality of oxidized fiber substrates are fed through a first carbonization furnace and a second carbonization furnace in sequence from upstream in a direction in which the plurality of oxidized fiber substrates are fed.

3. An apparatus for manufacturing a carbon fiber electrode substrate by feeding an oxidized fiber substrate through a carbonization furnace to carbonize the oxidized fiber substrate, the apparatus comprising:
   a feeding unit configured to feed, through the carbonization furnace, a plurality of oxidized fiber substrates arranged in a thickness direction of the oxidized fiber substrates.

4. The apparatus according to claim 3, wherein
   the carbonization furnace includes a first carbonization furnace and a second carbonization furnace in sequence from upstream in a direction in which the plurality of oxidized fiber substrates are fed.

EP 4 120 403 A1

## FIG. 1A

101    102    103

1a

105    106    100

3a

## FIG. 1B

1a  1b  1c  1d    101    102    103    3d  3c  3b  3a

104    105    106    107    100

FIG. 2A

FIG. 2B

EP 4 120 403 A1

FIG. 3A

FIG. 3B

EP 4 120 403 A1

FIG. 4A

101 128 102 128 128 103 128

1a

3a

120

128 105 106

EP 4 120 403 A1

FIG. 4B

1a 1b 1c 1d 101 102 103 3d 3c 3b 3a

104 128 105 128 106 128 120 107

EP 4 120 403 A1

# FIG. 5A

# FIG. 5B

FIG. 6A

FIG. 6B

EP 4 120 403 A1

FIG. 7A

EP 4 120 403 A1

FIG. 7B

# FIG. 8A

# FIG. 8B

FIG. 9A

FIG. 9B

**INTERNATIONAL SEARCH REPORT**

International application No.

PCT/JP2021/007981

| A. CLASSIFICATION OF SUBJECT MATTER |
|---|
| Int. Cl. H01M4/88(2006.01)i, C25B11/04(2021.01)i, H01M8/0213(2016.01)i, D01F9/22(2006.01)i<br>FI: H01M4/88 C, C25B11/12, D01F9/22, H01M8/0213<br>According to International Patent Classification (IPC) or to both national classification and IPC |

| B. FIELDS SEARCHED |
|---|
| Minimum documentation searched (classification system followed by classification symbols)<br>Int. Cl. D01F9/22, H01M4/88, C25B11/04, H01M8/0213 |
| Documentation searched other than minimum documentation to the extent that such documents are included in the fields searched<br>Published examined utility model applications of Japan    1922-1996<br>Published unexamined utility model applications of Japan   1971-2021<br>Registered utility model specifications of Japan       1996-2021<br>Published registered utility model applications of Japan   1994-2021 |
| Electronic data base consulted during the international search (name of data base and, where practicable, search terms used) |

| C. DOCUMENTS CONSIDERED TO BE RELEVANT | | |
|---|---|---|
| Category* | Citation of document, with indication, where appropriate, of the relevant passages | Relevant to claim No. |
| X | JP 2004-176245 A (TORAY INDUSTRIES, INC.) 24 June 2004, claim 9, paragraphs [0017], [0021]-[0024], [0037], [0038], fig. 1, 4 | 1-4 |
| X<br>A | JP 2018-40099 A (TORAY INDUSTRIES, INC.) 15 March 2018, claim 7, paragraphs [0001], [0014]-[0020], [0025], [0053]-[0061], fig. 1 | 1, 3<br>2, 4 |
| A | JP 2007-2394 A (TORAY INDUSTRIES, INC.) 11 January 2007, claim 10, paragraphs [0023], [0024], [0038], [0055], [0058], [0059] | 1-4 |
| P, A | JP 2020-133006 A (TORAY INDUSTRIES, INC.) 31 August 2020, claim 1, paragraphs [0001], [0013], [0025]-[0034], fig. 1 | 1-4 |

| ☐ Further documents are listed in the continuation of Box C. | ☒ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>09.04.2021 | Date of mailing of the international search report<br>20.04.2021 |
|---|---|
| Name and mailing address of the ISA/<br>    Japan Patent Office<br>    3-4-3, Kasumigaseki, Chiyoda-ku,<br>    Tokyo 100-8915, Japan | Authorized officer<br><br>Telephone No. |

Form PCT/ISA/210 (second sheet) (January 2015)

**INTERNATIONAL SEARCH REPORT**

Information on patent family members

International application No.

PCT/JP2021/007981

| Patent Documents referred to in the Report | Publication Date | Patent Family | Publication Date |
|---|---|---|---|
| JP 2004-176245 A | 24.06.2004 | (Family: none) | |
| JP 2018-40099 A | 15.03.2018 | (Family: none) | |
| JP 2007-2394 A | 11.01.2007 | (Family: none) | |
| JP 2020-133006 A | 31.08.2020 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005206968 A